# EUROPÄISCHE PATENTANMELDUNG

(11) **EP 2 955 055 A1**
(43) Veröffentlichungstag der Anmeldung: **16.12.2015**
(21) Anmeldenummer: 15166874.6
(22) Anmeldetag: 08.05.2015
(51) Int. Cl.: B60N 2/42, B60N 2/427, B60R 19/26, F16F 1/14, F16F 7/12, B60N 2/20

(54) **ROTATIONSENERGIE-ABSORBER SOWIE FAHRZEUGSITZ MIT EINEM DERARTIGEN ROTATIONSENERGIE-ABSORBER**

(30) Priorität: 12.06.2014 DE 102014211274
(71) Anmelder: SUSPA GmbH, 90518 Altdorf (DE)
(72) Erfinder: Röll, Sven, 92353 Postbauer-Heng (DE); Waldmüller, Stefan, 90518 Altdorf (DE); Welker, Thomas, 90518 Altdorf (DE); El-Azzeh, Murad, 90518 Altdorf (DE)
(74) Vertreter: Rau, Schneck & Hübner Patentanwälte Rechtsanwälte PartGmbB

(57) **Zusammenfassung**

Ein Rotationsenergie-Absorber (5) für einen Fahrzeugsitz umfasst eine Rotationsachse (11), ein zentrisch zur Rotationsachse (11) angeordnetes, äußeres Rohr-Element (13), ein konzentrisch im äußeren Rohr-Element (13) angeordnetes, inneres Rohr-Element (12) und mindestens ein Energieabsorptions-Element (15) zum Absorbieren von Rotationsenergie, wobei das innere Rohr-Element (12) und das äußere Rohr-Element (13) um die Rotationsachse (11) relativ zueinander drehbar sind.

## Beschreibung

Die vorliegende Patentanmeldung nimmt die Priorität der deutschen Patentanmeldung DE 10 2014 211 274.5 in Anspruch, deren Inhalt durch Bezugnahme hierin aufgenommen wird.

Die Erfindung betrifft einen Rotationsenergie-Absorber für einen Fahrzeugsitz sowie einen Fahrzeugsitz mit einem derartigen Rotationsenergie-Absorber.

In einem Kraftfahrzeug, insbesondere in einem Automobil, ist ein Fahrgast mittels eines Anschnallgurtes an einem Fahrzeugsitz gesichert. Bei einem Aufprall des Kraftfahrzeugs wirkt ein Drehmoment auf die Lehne des Fahrzeugsitzes. Um eine Beeinträchtigung auf den Fahrgast zu reduzieren und insbesondere um Verletzungen des Fahrgastes zu vermeiden, ist aus dem Stand der Technik bekannt, dass die Sitzlehne bei Erreichen eines vorgegebenen Drehmoments versagen soll. Dazu kann eine Sollknickstelle im Rahmen der Sitzlehne vorgesehen sein. Die Festlegung des vorbestimmten Drehmoments mittels der Sollknickstelle ist ungenau. Als Drehmoment-Begrenzer ist allgemein eine Rutschkupplung bekannt. Eine Rutschkupplung ist aufwendig konstruiert, weist ein hohes Gewicht auf und ist kostenintensiv.

Der Erfindung liegt die Aufgabe zugrunde, ein Gesundheitsrisiko eines Fahrgastes auf einem Fahrzeugsitz zu reduzieren.

Die Aufgabe wird durch die Merkmale des Anspruchs 1 gelöst. Der Kern der Erfindung besteht darin, dass ein Rotationsenergie-Absorber für einen Fahrzeugsitz in einem Kraftfahrzeug vorgesehen ist. Der Rotationsenergie-Absorber weist ein Energieabsorptions-Element auf, das geeignet ist, Rotationsenergie zu absorbieren. Der Rotationsenergie-Absorber weist eine Rotationsachse und ein zentrisch zur Rotationsachse angeordnetes, äußeres Rohr-Element auf. Das äußere Rohr-Element weist im Wesentlichen einen senkrecht zur Rotationsachse orientierten Ringquerschnitt auf. In dem äußeren Rohr-Element ist ein inneres Rohr-Element konzentrisch angeordnet. Insbesondere ist das innere Rohr-Element mit einer äußeren Oberfläche zumindest abschnittsweise flächig anliegend an einer Innenfläche des äußeren Rohr-Elements angeordnet. Das innere Rohr-Element und das äußere Rohr-Element sind durch Reibschluss und/oder Formschluss miteinander verbunden. Sobald ein äußeres, dem Rotationsenergie-Absorber eingeprägtes Drehmoment die die Rohr-Elemente verbindende Reibkraft erreicht bzw. übersteigt, ist ein Verdrehen der Rohr-Elemente zueinander möglich. Das innere Rohr-Element und das äußere Rohr-Element sind um die Rotationsachse relativ zueinander drehbar. Die Rotationsenergie der Drehung der Rohr-Elemente zueinander wird durch das mindestens eine Energieabsorptions-Element absorbiert, indem die Rotationsenergie in Verformungsenergie und/oder Wärme umgewandelt wird. Durch eine Variation der jeweiligen Größe und der Anzahl der Energieabsorptions-Elemente kann ein vorbestimmtes Drehmoment, bei dem der Rotationsenergie-Absorber und somit der Fahrzeugsitz versagt, mit großer Genauigkeit eingestellt werden. Der Rotationsenergie-Absorber ermöglicht die freie Definierbarkeit präziser Drehmomente, bei welchen ein Versagen des Fahrzeugsitzes erfolgen soll. Darüber hinaus sind Drehmomentenverläufe frei definierbar. Zudem ist mittels des erfindungsgemäßen Rotationsenergie-Absorbers festlegbar, welche Momentenspitzenbelastungen auftreten sollen und dürfen. Das Dämpfungsverhalten des Rotationsenergie-Absorbers ist geschwindigkeitsunabhängig. Insbesondere sind konstante Drehmomentverläufe bei veränderlichen Geschwindigkeitsbelastungen möglich. Der Rotationsenergie-Absorber ist unaufwendig und leicht bauend konstruiert. Der Rotationsenergie-Absorber ist kostengünstig. Der Rotationsenergie-Absorber ist platzsparend. Der Rotationsenergie-Absorber ist unkompliziert montierbar. Der Rotationsenergie-Absorber ist geräuschfrei in der Anwendung.

Ein Rotationsenergie-Absorber, bei dem das äußere Rohr-Element mindestens ein Energieabsorptions-Element aufweist, ermöglicht eine vereinfachte Fertigung des Rotationsenergie-Absorbers und insbesondere des äußeren Rohr-Elements.

Ein Rotationsenergie-Absorber, bei dem das innere Rohr-Element mindestens ein Energieabsorptions-Element aufweist, vereinfacht die Umwandlung der Rotationsenergie in Verformungsenergie und/oder Wärme.

Ein Rotationsenergie-Absorber mit mehreren, insbesondere drei, Energieabsorptions-Elementen ermöglicht eine zuverlässige Absorption der Rotationsenergie. Die Energieabsorptions-Elemente sind in einer Energieabsorptions-Element-Anordnung entlang einer Umfangslinie um die Rotationsachse an dem äußeren Rohr-Element und/oder an dem inneren Rohr-Element angeordnet. Es können auch zwei oder mindestens vier, insbesondere mindestens fünf, insbesondere mindestens sechs, insbesondere mindestens acht, insbesondere mindestens zehn und insbesondere höchstens 100 Energieabsorptions-Elemente in einer Energieabsorptions-Element-Anordnung enthalten sein. Die Anzahl und Größe der Energieabsorptions-Elemente richtet sich nach dem vorbestimmbaren Drehmoment, bei dem der Rotationsenergie-Absorber versagen soll.

Ein Rotationsenergie-Absorber mit mindestens einer ersten Energieabsorptions-Element-Anordnung und einer zweiten Energieabsorptions-Element-Anordnung ermöglicht eine entkoppelte, stufenweise Absorption von Rotationsenergie. Insbesondere ist es möglich, dass die Energieabsorptions-Elemente der ersten Energieabsorptions-Element-Anordnung unabhängig von den Energieabsorptions-Elementen der zweiten Energieabsorptions-Element-Anordnung Rotationsenergie absorbieren. Die Energieabsorptions-Element-Anordnungen sind entlang der Rotationsachse beabstandet zueinander angeordnet. Ein Rotationsenergie-Absorber, bei dem die Energieabsorptions-Elemente der ersten Energieabsorptions-Element-Anordnung mit einem ersten Rotationswinkel um die Rotationsachse angeordnet sind, der sich von einem zweiten Rotationswinkel der Energieabsorptions-Elemente der zweiten Energieabsorptions-Element-Anordnung unterscheidet, ermöglicht eine belastungsangepasste Konstruktion des Rotationsenergie-Absorbers.

Ein Rotationsenergie-Absorber, bei dem das mindestens eine Energieabsorptions-Element ein an dem inneren Rohr-Element und/oder an dem äußeren Rohr-Element radial vorstehendes nach innen oder außen ragendes Form-Element ist, ist die Fertigung für das Energieabsorptions-Element vereinfacht. Die Form-Elemente werden insbesondere als Sicke, Delle und/oder als Vertiefung ausgeführt und können unkompliziert in zwei ineinander gesteckte Rohre eingeformt werden. Die Sicke ist als eine von außen in das jeweilige Rohr-Element eingebrachte Vertiefung ausgeführt. Die Vertiefung hat im Wesentlichen eine langlochförmige Kontur. Es sind aber auch andere Konturen, wie beispielsweise kreisförmig oder eckig denkbar. Das Form-Element kann auch radial nach außen ragen. Insbesondere dann, wenn der Rotationsenergie-Absorber auf einer Welle angeordnet sein soll, sind nach außen ragende Form-Elemente vorteilhaft.

Ein Rotationsenergie-Absorber, bei dem ein Form-Element des inneren Rohr-Elements an einem korrespondierenden Form-Element des äußeren Rohr-Elements vollflächig anliegt, verbessert die Energieabsorption.

Ein Rotationsenergie-Absorber, bei dem ein Form-Element des inneren Rohr-Elements als Freilauf-Form-Element ausgeführt ist, ermöglicht zumindest abschnittsweise eine Freilauffunktion des Rotationsenergie-Absorbers. Das bedeutet, dass in einem Freilauf-Abschnitt, also innerhalb eines Freilaufwinkelbereichs um die Rotationsachse, keine Energieabsorption durch den Rotationsenergie-Absorber stattfindet. In diesem Freilauf-Abschnitt kann Rotationsenergie beispielsweise durch Energieabsorptions-Elemente, insbesondere anderer Energieabsorptions-Element-Anordnungen, absorbiert werden. Dadurch ist es möglich, eine in Bezug auf einen Rotationswinkel um die Rotationsachse gestufte Energieabsorption mit dem Rotationsenergie-Absorber zu realisieren. Es ist also möglich, eine stufenweise Dämpfungswirkung in Abhängigkeit des Rotationswinkels bereitzustellen. Insbesondere sind alle Form-Elemente einer Energieabsorptions-Element-Anordnung als Freilauf-Form-Element ausgeführt. Insbesondere ist also eine Rotation entlang der Rotationsrichtung um die Rotationsachse energieabsorptionsfrei. Das Freilauf-Form-Element ist insbesondere dadurch ausgeführt, dass das Form-Element des inneren Rohr-Elements abschnittsweise von dem Form-Element des äußeren Rohr-Elements radial und/oder tangential, also in Umfangsrichtung beabstandet angeordnet ist. Das bedeutet, dass das Form-Element des inneren Rohr-Elements insbesondere nicht vollflächig an dem Form-Element des äußeren Rohr-Elements anliegt.

Ein Rotationsenergie-Absorber mit einem Dämpfungs-Element, insbesondere mit einer blockierbaren Gasfeder, weist eine verbesserte Funktionalität auf.

Es ist eine weitere Aufgabe der vorliegenden Erfindung, einen Fahrzeugsitz bereitzustellen, bei dem die Fahrgastsicherheit verbessert ist.

Diese Aufgabe wird durch die Merkmale des Anspruchs 11 gelöst. Der Kern der Erfindung besteht darin, dass bei einem Fahrzeugsitz zwischen einer Sitzschale und einer um eine Sitz-Drehachse drehbar mit der Sitzschale verbundenen Sitzlehne mindestens ein Rotationsenergie-Absorber vorgesehen ist. Insbesondere sind zwei Rotationsenergie-Absorber an dem Fahrzeugsitz vorgesehen. Die Vorteile des erfindungsgemäßen Fahrzeugsitzes entsprechen im Wesentlichen denen des Rotationsenergie-Absorbers, auf dessen Vorteile hiermit verwiesen wird. Der erfindungsgemäße Fahrzeugsitz reduziert eine Belastung auf einen Fahrgast, der den Fahrzeugsitz nutzt. Bei einem unvorhergesehenen Ereignis, wie beispielsweise einem spontanen Aufprall des Kraftfahrzeugs wirkt ein Drehmoment auf den Fahrzeugsitz, das von dem Oberkörper eines Fahrgastes über den Anschnallgurt auf die Sitzlehne übertragen wird. Zusätzlich ermöglicht der erfindungsgemäße Fahrzeugsitz auch einem hinter dem Fahrzeugsitz sitzenden Fahrgast erhöhte Sicherheit. Sofern der Fahrgast hinter dem erfindungsgemäßen Fahrzeugsitz unangeschnallt bei einem Aufprall des Fahrzeugs auf den Fahrzeugsitz prallt, könnte er sich an dem Fahrzeugsitz verletzen. Da die Sitzlehne bei einer Überbeanspruchung kontrolliert versagt, ist das Verletzungsrisiko für den nichtangeschnallten Fahrgast hinter dem erfindungsgemäßen Sitz reduziert.

Ein Fahrzeugsitz, bei dem die Sitz-Drehachse und die Rotations-Achse koaxial angeordnet sind, ermöglicht eine unmittelbare Vorhersagbarkeit des vorbestimmten Drehmoments.

Ein Fahrzeugsitz, bei dem das äußere Rohr-Element des Rotationsenergie-Absorbers drehfest bezüglich der Rotations-Achse an der Sitzschale befestigt ist, ermöglicht eine unkomplizierte und unmittelbare Anbindung des Rotationsenergie-Absorbers an den Fahrzeugsitz. Insbesondere weist der Fahrzeugsitz eine Rotationsenergie-Absorber-Halterung auf, die einteilig mit der Sitzschale ausgeführt ist.

Ein Fahrzeugsitz, bei dem das innere Rohr-Element des Rotationsenergie-Absorbers drehfest bezüglich der Rotations-Achse an der Sitzlehne befestigt ist, ermöglicht eine vereinfachte Befestigung an dem Fahrzeugsitz.

Ein Fahrzeugsitz, bei dem das innere Rohr-Element einen Montage-Abschnitt aufweist, der zur drehfesten Verbindung mit der Sitzlehne in einer Rotationsenergie-Absorber-Aufnahme angeordnet ist, ermöglicht eine vereinfachte Montage. Die Rotationsenergie-Absorber-Aufnahme ist unkompliziert, beispielsweise als kreisförmige Durchgangsöffnung ausgeführt. Das Montieren des inneren Rohr-Elements an der Rotationsenergie-Absorber-Aufnahme ist vereinfacht. Der Montage-Abschnitt ist insbesondere frei von Energieabsorptions-Elementen ausgeführt.

Sowohl die in den Patentansprüchen angegebenen Merkmale als auch in den nachfolgenden Ausführungsbeispielen der erfindungsgemäßen Vorrichtung angegebenen Merkmale sind jeweils für sich allein oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkung dar, sondern weisen im Wesentlichen lediglich beispielhaften Charakter auf.

Zusätzliche Merkmale und Einzelheiten der Erfindung ergeben sich aus der nachfolgenden Beschreibung eines Ausführungsbeispiels anhand der Zeichnung. Es zeigen:
- Fig. 1: eine perspektivische Darstellung eines Fahrzeugsitzes mit einem erfindungsgemäßen Rotationsenergie-Absorber,
- Fig. 2: eine vergrößerte Ausschnittsdarstellung einer Frontansicht gemäß Fig. 1,
- Fig. 3: eine Schnittdarstellung gemäß Schnittlinie III-III in Fig. 2,
- Fig. 4: eine Schnittdarstellung gemäß Schnittlinie IV-IV in Fig. 2, und
- Fig. 5: eine perspektivische Darstellung des Rotationsenergie-Absorbers gemäß Fig. 1, 2.

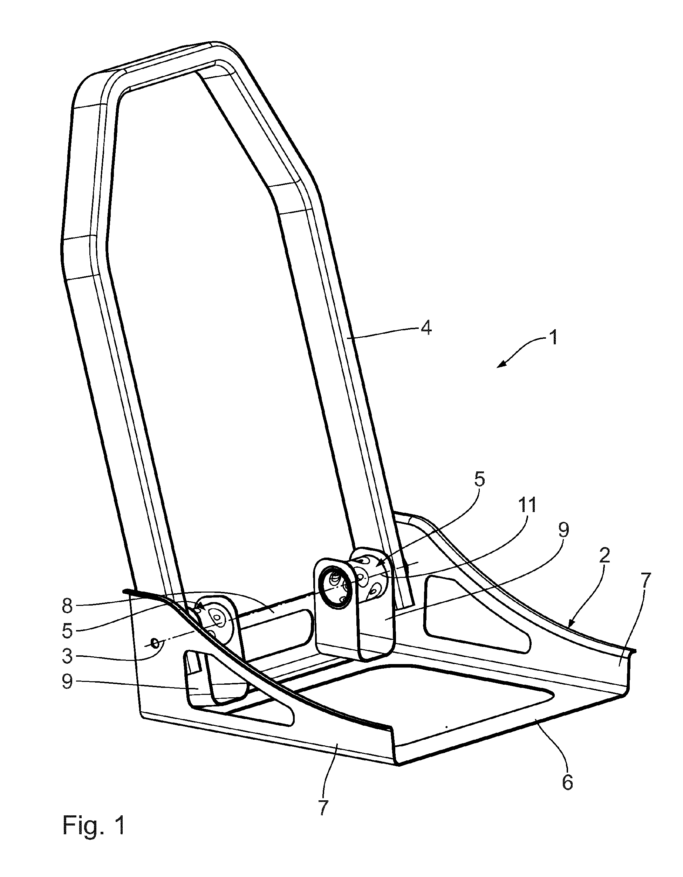

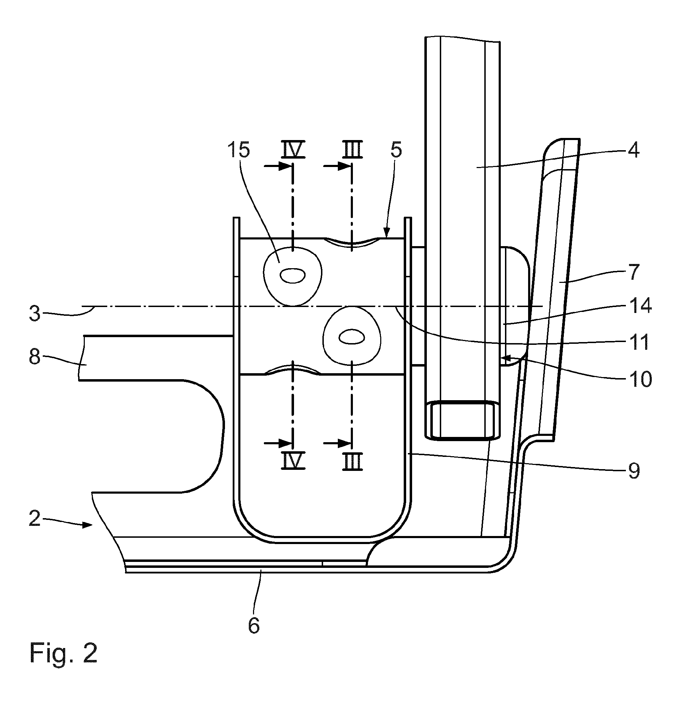

Ein in Fig. 1 und 2 dargestellter Fahrzeugsitz 1 wird in einem Kraftfahrzeug, beispielsweise in einem Automobil, eingesetzt. Aus darstellerischen Gründen ist lediglich der konstruktiv maßgebliche Rahmen des Fahrzeugsitzes 1 dargestellt. Insbesondere sind ein Sitzüberzug und Polster-Elemente nicht dargestellt.

Der Rahmen des Fahrzeugsitzes 1 umfasst eine Sitzschale 2 und eine mit der Sitzschale 2 um eine Sitz-Drehachse 3 verbundene Sitzlehne 4. Die Sitzlehne 4 ist über zwei entlang der Sitz-Drehachse 3 beabstandet zueinander und koaxial zueinander angeordnete Rotationsenergie-Absorber 5 mit der Sitzschale 2 verbunden.

Die Sitzschale 2 hat eine rahmenartige Struktur mit einem im Wesentlichen horizontal orientierten, ebenen Boden 6. Der Boden 6 ist rechteckförmig ausgeführt. An zwei gegenüberliegenden Kanten des Bodens 6 erstrecken sich zwei Seitenwände 7. Die Seitenwände 7 sind im Wesentlichen vertikal orientiert und einstückig an dem Boden 6 angeformt. Insbesondere ist die Sitzschale 2 ein Blechbiegeteil. Die Sitz-Drehachse 3 ist parallel zum Boden 6 orientiert und schneidet jeweils die Seitenwand 7. In einem hinteren, der Sitz-Drehachse 3 zugewandten Bereich weist die Seitenwand 7 eine sich in vertikaler Richtung erstreckende erste Höhe auf. In einem vorderen, der Sitz-Drehachse 3 abgewandten Bereich weist die Seitenwand 7 eine gegenüber der ersten Höhe reduzierte zweite Höhe auf. Zwischen der ersten Höhe und der zweiten Höhe weist die Seitenwand 7 einen kontinuierlich abnehmenden Höhenverlauf auf. In dem hinteren Bereich des Bodens 6 erstreckt sich eine Rückwand 8 im Wesentlichen vertikal nach oben. Die Rückwand 8 ist einstückig mit dem Boden 6 ausgeführt. Die Rückwand 8 der Sitzschale 2 weist eine gegenüber der ersten Höhe der Seitenwände 7 reduzierte Höhe auf.

Fest mit der Sitzschale 2 verbunden sind zwei Rotationsenergie-Absorber-Halterungen 9. Die Rotationsenergie-Absorber-Halterungen 9 sind im Wesentlichen U-förmig ausgeführt. Die beiden freien Schenkel des U sind parallel zueinander und insbesondere jeweils senkrecht zur Sitz-Drehachse 3 orientiert. Der die zwei freien Schenkel miteinander verbindende Zwischenschenkel des U ist mit einer Unterseite fest an dem Boden 6 der Sitzschale 2 befestigt, insbesondere verschweißt. Die Rotationsenergie-Absorber-Halterungen 9 weisen jeweils in den freien Schenkeln eine Durchgangsöffnung auf, in die der Rotationsenergie-Absorber 5 eingesetzt ist.

Die Sitzlehne 4 ist als gebogenes Profil-Element ausgeführt. Die Sitzlehne 4 hat einen im Wesentlichen bügelförmigen Profilverlauf. Der Bügel weist zwei freie Schenkel auf, die sich von der Sitzschale 2 aus in einer Sitzlehnen-Ebene erstrecken. Die Sitzlehnen-Ebene ist quer zum Boden 6 der Sitzschale 2 orientiert. Gemäß dem gezeigten Ausführungsbeispiel ist der Neigungswinkel, mit dem Sitzlehne 4 gegenüber dem Boden 6 der Sitzschale 2 angeordnet ist, etwa 110°. Der Neigungswinkel zwischen Sitzlehne 4 und Sitzschale 2 ist verstellbar. Die beiden freien Schenkel sind über einen gemeinsamen Bogen der Sitzlehne 4 zusammengeführt. Die Sitzlehne 4 ist einteilig ausgeführt. Die Sitzlehne 4 ist zwischen jeweils einer Seitenwand 7 der Sitzschale 2 und einer Rotationsenergie-Absorber-Halterung 9 angeordnet. Im Bereich der freien Enden der freien Schenkel der Sitzlehne 4 ist jeweils eine Rotationsenergie-Absorber-Aufnahme 10 vorgesehen, in die der Rotationsenergie-Absorber 5 eingesetzt ist. Der Rotationsenergie-Absorber 5 ist in der Rotationsenergie-Absorber-Aufnahme 10 drehfest mit der Sitzlehne 4 verbunden.

Der Rotationsenergie-Absorber 5 ist mit einer Rotationsachse 11 koaxial zu der Sitz-Drehachse 3 an dem Fahrzeugsitz 1 angeordnet. Der Rotationsenergie-Absorber 5 weist ein zentrisch zur Rotationsachse 11 angeordnetes äußeres Rohr-Element 13 und ein konzentrisch im äußeren Rohr-Element 13 angeordnetes inneres Rohr-Element 12 auf. Das innere Rohr-Element 12 ist ein Metallrohr, insbesondere ein Stahlrohr. Das äußere Rohr-Element 13 ist ein Metallrohr, insbesondere ein Stahlrohr. Wesentlich für die Auswahl eines Materials der Rohr-Elemente 12, 13 ist deren Kaltverformbarkeit. Dazu ist es erforderlich, dass die Rohr-Elemente 12, 13 bei Raumtemperatur eine ausreichende Duktilität aufweisen, um eine Verformung des inneren Rohr-Elements 12 durch Drehung gegenüber dem äußeren Rohr-Element 13 zu ermöglichen. Es ist zusätzlich möglich, die Energieabsorptions-Elemente 15 des äußeren Rohr-Elements 13 auszusteifen. Dadurch ist eine zuverlässige Verformung, also das Ziehen einer Vertiefung durch die Energieabsorptions-Elemente 15 des äußeren Rohr-Elements 13 am inneren Rohr-Element 12 zuverlässig gewährleistet. Das innere Rohr-Element 12 ist gegenüber dem äußern Rohr-Element 13 um die Rotationsachse 11 drehbar. Das innere Rohr-Element 12 weist einen Montage-Abschnitt 14 auf. Der Montage-Abschnitt 14 ist entlang der Rotationsachse 11 an dem äußeren Rohr-Element 13 vorstehend angeordnet. Mit dem Montage-Abschnitt 14 ist das innere Rohr-Element 12 drehfest in der Rotationsenergieabsorber-Aufnahme 10 mit der Sitzlehne 4 verbunden. Mit dem äußeren Rohr-Element 13 ist der Rotationsenergie-Absorber 5 drehfest mit der Rotationsenergie-Absorber-Haltung 9 der Sitzschale 2 drehfest verbunden. An einem dem Montage-Abschnitt 14 gegenüberliegenden Ende des Rotationsenergie-Absorbers 5 sind das innere Rohr-Element 12 und das äußere Rohr-Element 13 bündig angeordnet.

Es ist möglich, an dem Rotationsenergie-Absorber 5 ein nicht dargestelltes Dämpfungs-Element vorzusehen, um eine zusätzliche Dämpfung einer Rotationsbewegung zwischen den Rohr-Elementen 12, 13 zu ermöglichen. Insbesondere ist das Dämpfungs-Element als blockierbare Gasfeder ausgeführt.

Der Rotationsenergie-Absorber 5 weist mehrere, gemäß dem gezeigten Ausführungsbeispiel, sechs Energieabsorptions-Elemente 15 auf. Wesentlich ist, dass mindestens ein Energieabsorptions-Element 15 vorgesehen ist. Während einer Drehung der Rohr-Elemente 12, 13 relativ zueinander wird durch das mindestens eine Energieabsorptions-Element 15 Rotationsenergie absorbiert. Das bedeutet, dass Rotationsenergie der Drehung der Rohr-Elemente 12, 13 zueinander in Verformungsenergie und/oder Wärme umgewandelt wird.

Gemäß dem gezeigten Ausführungsbeispiel sind jeweils drei Energieabsorptions-Elemente 15 in einer ersten Energieabsorptions-Element-Anordnung und in einer zweiten Energieabsorptions-Element-Anordnung angeordnet. Die Energieabsorptions-Elemente 15 sind in der Energieabsorptions-Element-Anordnung entlang einer Umfangslinie des äußeren Rohr-Elements 13 um die Rotationsachse 11 angeordnet. Bezogen auf die Rotationsachse 11 ist ein Öffnungswinkel zwischen zwei benachbarten Energieabsorptions-Elementen 15 120°. Das bedeutet, dass die Energieabsorptions-Elemente 15 entlang der Umfangslinie um die Rotationsachse 11 gleich beabstandet sind.

Die erste Energieabsorptions-Element-Anordnung ist dem Montage-Abschnitt 14 abgewandt. Die zweite Energieabsorptions-Element-Anordnung ist dem Montage-Abschnitt 14 zugewandt angeordnet. Es ist auch möglich, dass nur eine Energieabsorptions-Element-Anordnung vorgesehen ist. Es ist auch denkbar, dass mehr als zwei Energieabsorptions-Element-Anordnungen, insbesondere mindestens drei, insbesondere mindestens vier und insbesondere höchstens 20 Energieabsorptions-Element-Anordnungen vorgesehen sind. Die Energieabsorptions-Element-Anordnungen sind entlang der Rotationsachse 11 beabstandet zueinander angeordnet. Die einzelnen Energieabsorptions-Elemente sind mit ihrer Drehwinkelposition bezüglich der Rotationsachse 11 auf Lücke angeordnet. Das bedeutet, dass an einer Drehwinkelposition, an der ein Energieabsorptions-Element der einen Energieabsorptions-Element-Anordnung vorgesehen ist, kein Energieabsorptions-Element der jeweils anderen Energieabsorptions-Element-Anordnung vorgesehen ist. Dadurch ist gewährleistet, dass die Struktur des Rotationsenergie-Absorbers 5 insgesamt gleichmäßig, insbesondere nicht unnötig beeinträchtigt, insbesondere geschwächt, ist.

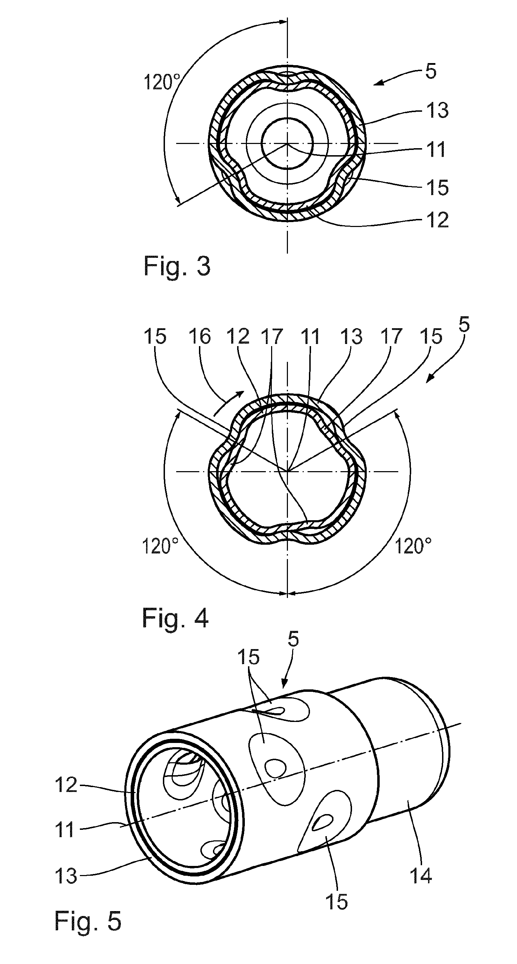

Fig. 3 zeigt eine Schnittdarstellung der zweiten Energieabsorptions-Element-Anordnung. Fig. 4 zeigt eine Schnittdarstellung der ersten Energieabsorptions-Element-Anordnung.

Sowohl das innere Rohr-Element 12 als auch das äußere Rohr-Element 13 weisen jeweils drei Energieabsorptions-Elemente 15 auf. Die Energieabsorptions-Elemente 15 sind als radial nach innen vorstehende Form-Elemente ausgeführt. Gemäß dem gezeigten Ausführungsbeispiel sind die Energieabsorptions-Elemente 15 als Sicken ausgeführt. Die Sicken weisen in einer Abwicklung der jeweils äußeren Kontur des inneren Rohr-Elements 12 oder des äußeren Rohr-Elements 13 eine Langlochform auf. Aus den Schnittdarstellungen in Fig. 3 und 4 ist insbesondere die versetzte Anordnung der Energieabsorptions-Elemente 15 in den beiden verschiedenen Energieabsorptions-Element-Anordnungen deutlich. Bei der Schnittdarstellung in Fig. 3, also bei der zweiten Energieabsorptions-Element-Anordnung, sind Energieabsorptions-Elemente 15 in der 12-Uhr-Position angeordnet. Die beiden weiteren Energieabsorptions-Elemente 15 sind unter Drehwinkeln von +/- 120° um die Drehachse 11 angeordnet. An einer 6-Uhr-Position ist bei der zweiten Energieabsorptions-Element-Anordnung kein Energieabsorptions-Element 15 vorgesehen.

Bei der ersten Energieabsorptions-Element-Anordnung gemäß Fig. 4 ist ein Energieabsorptions-Element 15 in der 6-Uhr-Position angeordnet. Die weiteren Energieabsorptions-Elemente 15 sind unter einem Drehwinkel von +/- 120° um die Rotationsachse 11 angeordnet. Bei der 12-Uhr-Position ist bei der ersten Energieabsorptions-Element-Anordnung kein Energieabsorptions-Element 15 angeordnet.

Im Folgenden wird die zweite Energieabsorptions-Element-Anordnung näher erläutert. Wesentlich ist, dass die Form-Elemente des inneren Rohr-Elements 12 mit den jeweils korrespondierenden Form-Elementen des äußeren Rohr-Elements 13 derart geometrisch ähnlich ausgeführt sind, dass eine Außenfläche des innen liegenden Form-Elements des inneren Rohr-Elements 12 an einer Innenfläche des korrespondierenden Form-Elements des äußeren Rohr-Elements 13 vollflächig anliegt.

Bei der ersten Energieabsorptions-Element-Anordnung gemäß Fig. 4 sind die Form-Elemente des inneren Rohr-Elements 12 als Freilauf-Form-Elemente ausgeführt. Entlang einer Rotationsrichtung 16 um die Rotationsachse 11 ist gemäß dem Freilauf-Form-Element eine energieabsorptionsfreie Rotation ermöglicht. Dies ist dadurch ermöglicht, dass das Form-Element des inneren Rohr-Elements 12 in Rotationsrichtung 16 gesehen dem Form-Element des äußeren Rohr-Elements 13 ein Nebenform-Element 17 aufweist. Die Kontur des inneren Rohr-Elements 12 ist im Wesentlichen geometrisch ähnlich zu der Kontur des äußeren Rohr-Elements 13. Lediglich im Bereich des Nebenform-Elements 17 weichen die Konturen voneinander ab. Im Bereich des Nebenform-Elements 17 ist die Kontur des inneren Rohr-Elements 12 gegenüber der des äußeren Rohr-Elements 13 nach innen radial eingeprägt. Das bedeutet, dass im Bereich des Nebenform-Elements 17 das innere Rohr-Element 12 zu dem äußeren Rohr-Element 13 beabstandet angeordnet ist. Wesentlich für die Freilauffunktion der Energieabsorptions-Elemente der ersten Energieabsorptions-Element-Anordnung ist, dass das Form-Element des inneren Rohr-Elements 12 zumindest abschnittsweise von dem Form-Element des äußeren Rohr-Elements 13 radial und/oder tangential bezogen auf die Rotationsachse 11 beabstandet angeordnet ist.

Nachfolgend wird die Funktion des Rotationsenergie-Absorbers 5 anhand des Fahrzeugsitzes 1 näher erläutert. Bei einer Drehmomentbeanspruchung des Fahrzeugsitzes 1, beispielsweise infolge eines Aufpralls eines Kraftfahrzeugs, in dem der Fahrzeugsitz 1 angebracht ist, wird die Sitzlehne 4 gegenüber der Sitzschale 2 mit einem Drehmoment um die Sitzdrehachse 3 beaufschlagt. Diese Drehmomentbeaufschlagung um die Sitzdrehachse 3 bewirkt unmittelbar eine Drehmomentbeaufschlagung der beiden Rotationsenergie-Absorber 5 um die jeweilige Rotationsachse 11, die koaxial zur Sitzdrehachse 3 ausgerichtet ist. Eine Drehbewegung der Sitzlehne 4 um die Sitzdrehachse 3 bewirkt eine Drehbewegung des inneren Rohr-Elements 12, das über den Montageabschnitt 14 drehfest mit der Sitzlehne 4 verbunden ist. Aufgrund der drehbaren Anordnung des inneren Rohr-Elements 12 in dem äußeren Rohr-Element 13 erfolgt eine Rotation der beiden Rohr-Elemente 12, 13 relativ zueinander um die Rotationsachse 11. Die Rotation des inneren Rohr-Elements 12 gegenüber dem äußeren Rohr-Element 13 bewirkt, dass die Sicken des äußeren Rohr-Elements 13 eine Umformung des inneren Rohr-Elements 12 bewirken. Die Verformung erfolgt dadurch, dass die Energieabsorptions-Elemente 15 des äußeren Rohr-Elements 13 eine in tangentialer Richtung orientierte Vertiefung in das innere Rohr-Element 12 ziehen. Durch diesen Umformvorgang wird die Rotationsenergie in Verformungsenergie und/oder Wärme umgewandelt. In Abhängigkeit der geometrischen Ausgestaltung der Energieabsorptions-Elemente 15 und/oder in Abhängigkeit der Anzahl der Energieabsorptions-Elemente ist der umzuwandelnde Energiebetrag einstellbar. Das maximal zu absorbierende Drehmoment kann für den Rotationsenergie-Absorber 5 insbesondere dadurch beeinflusst werden, dass die Tiefe der Energieabsorptions-Elemente verändert wird. Je größer die Tiefe des Energieabsorptions-Elements ist, desto größer ist die während der Rotation geleistete Verformungsarbeit, also die absorbierte Verformungsenergie. Dies gilt analog für die Anzahl der Energieabsorptions-Elemente 15. Je größer die Anzahl der Energieabsorptions-Elemente 15, desto größer ist die dadurch geleistete Verformungsarbeit und damit die zu absorbierende Verformungsenergie. Die eingeprägte, nutförmige Vertiefung durch die Energieabsorptions-Elemente des äußeren Rohr-Elements 13 erstreckt sich also entlang der Umfangslinie der jeweiligen Energieabsorptions-Element-Anordnung.

Bei einer Beaufschlagung der Sitzlehne 4 derart, dass das innere Rohr-Element 12 entlang der Rotationsrichtung 16, also im Uhrzeigersinn gemäß Fig. 3, 4, beaufschlagt wird, bewirken die Energieabsorptions-Elemente 15 der zweiten Energieabsorptions-Element-Anordnung eine unmittelbare Energieabsorption. Die in der ersten Energieabsorptions-Element-Anordnung vorgesehenen Energieabsorptions-Elemente mit Freilauffunktion bewirken zunächst keine Energieabsorption, da das innere Rohr-Element 12 infolge der Nebenformelemente 17 beabstandet von dem äußeren Rohr-Element 13 angeordnet ist. Eine Betätigung derart, dass das innere Rohr-Element 12 entgegen der Rotationsrichtung 16, also im Gegenuhrzeigersinn gemäß Fig. 3, 4, betätigt wird, erfolgt auch in der ersten Energieabsorptions-Element-Anordnung gemäß Fig. 4 unmittelbar eine Energieabsorption.

Sobald der Rotationswinkel groß genug ist, insbesondere etwa 120° erreicht, erreicht ein Energieabsorptions-Element 15 des äußeren Rohr-Elements 13 eine bereits gezogene nutförmige Vertiefung des in Umfangsrichtung am äußeren Rohr-Element 13 angeordneten Vorgänger-Energieabsorptions-Elements 15. Das weiter aufzunehmende Drehmoment ist dann reduziert. Das bedeutet, dass die Sitzlehne 4 nachgeben kann.

## Patentansprüche

1. Rotationsenergie-Absorber (5) für einen Fahrzeugsitz (1) umfassend
a. eine Rotationsachse (11),
b. ein zentrisch zur Rotationsachse (11) angeordnetes, äußeres Rohr-Element (13),
c. ein konzentrisch im äußeren Rohr-Element (13) angeordnetes, inneres Rohr-Element (12),
d. mindestens ein Energieabsorptions-Element (15) zum Absorbieren von Rotationsenergie,
wobei das innere Rohr-Element (12) und das äußere Rohr-Element (13) um die Rotationsachse (11) relativ zueinander drehbar sind.

2. Rotationsenergie-Absorber gemäß Anspruch 1, **dadurch gekennzeichnet, dass** das äußere Rohr-Element (13) mindestens ein Energieabsorptions-Element (15) aufweist.

3. Rotationsenergie-Absorber gemäß einem der vorstehenden Ansprüche, **dadurch gekennzeichnet, dass** das innere Rohr-Element (12) mindestens ein Energieabsorptions-Element (15) aufweist.

4. Rotationsenergie-Absorber gemäß einem der vorstehenden Ansprüche, **gekennzeichnet durch** mehrere Energieabsorptions-Elemente (15), die in einer Energieabsorptions-Element-Anordnung entlang einer Umfangslinie um die Rotationsachse (11) an dem äußeren Rohr-Element (13) und/oder an dem inneren Rohr-Element (12) angeordnet sind.

5. Rotationsenergie-Absorber gemäß Anspruch 4, **gekennzeichnet durch** mindestens eine erste Energieabsorptions-Element-Anordnung und eine zweite Energieabsorptions-Element-Anordnung, die entlang der Rotationsachse (11) beabstandet zueinander angeordnet sind.

6. Rotationsenergie-Absorber gemäß Anspruch 5, **dadurch gekennzeichnet, dass** die Energieabsorptions-Elemente (15) der ersten Energieabsorptions-Element-Anordnung mit einem ersten Rotationswinkel um die Rotationsachse angeordnet sind, der sich von einem zweiten Rotationswinkel der Energieabsorptions-Elemente (15) der zweiten Energieabsorptions-Element-Anordnung unterscheidet.

7. Rotationsenergie-Absorber gemäß einem der vorstehenden Ansprüche, **dadurch gekennzeichnet, dass** das mindestens eine Energieabsorptions-Element (15) ein an dem inneren Rohr-Element (12) und/oder an dem äußeren Rohr-Element (13) radial vorstehendes Form-Element, insbesondere eine Sicke, ist.

8. Rotationsenergie-Absorber gemäß Anspruch 7, **dadurch gekennzeichnet, dass** ein Form-Element des inneren Rohr-Elements (12) an einem korrespondieren Form-Element des äußeren Rohr-Elements (13) vollflächig anliegt.

9. Rotationsenergie-Absorber gemäß Anspruch 7 oder 8, **dadurch gekennzeichnet, dass** ein Form-Element des inneren Rohr-Elements (12) als Freilauf-Form-Element ausgeführt ist und insbesondere entlang einer Rotationsrichtung (16) um die Rotationsachse (11) eine energieabsorptionsfreie Rotation gewährleistet, indem insbesondere das Form-Element des inneren Rohr-Elements (12) abschnittsweise von dem Form-Element des äußeren Rohr-Elements (13) radial und/oder tangential beabstandet angeordnet ist.

10. Rotationsenergie-Absorber gemäß einem der vorstehenden Ansprüche, **gekennzeichnet durch** ein Dämpfungs-Element, insbesondere eine blockierbare Gasfeder.

11. Fahrzeugsitz mit
a. einer Sitzschale (2),
b. einer um eine Sitz-Drehachse (3) drehbar mit der Sitzschale (2) verbundene Sitzlehne (4) und
c. mindestens einem Rotationsenergie-Absorber (5) gemäß einem der vorstehenden Ansprüche.

12. Fahrzeugsitz gemäß Anspruch 11, **dadurch gekennzeichnet, dass** die Sitz-Drehachse (3) und die Rotationsachse (11) koaxial angeordnet sind.

13. Fahrzeugsitz gemäß Anspruch 11 oder 12, **dadurch gekennzeichnet, dass** das äußere Rohr-Element (13) des Rotationsenergie-Absorbers (5) drehfest bezüglich der Rotationsachse (11) an der Sitzschale (2) befestigt ist.

14. Fahrzeugsitz gemäß einem der Ansprüche 11 bis 13, **dadurch gekennzeichnet, dass** das innere Rohr-Element (12) des Rotationsenergie-Absorbers (5) drehfest bezüglich der Rotationsachse (11) an der Sitzlehne (4) befestigt ist.

15. Fahrzeugsitz gemäß Anspruch 14, **dadurch gekennzeichnet, dass** das innere Rohr-Element (12) einen, insbesondere entlang der Rotationsachse (11) an dem äußeren Rohr-Element (13) vorstehenden, MontageAbschnitt (14) aufweist, der zur drehfesten Verbindung mit der Sitzlehne (4) in einer Rotationsenergie-Absorber-Aufnahme (10) angeordnet ist.
